# EUROPÄISCHE PATENTSCHRIFT

(11) **EP 0 943 215 B1**
(45) Veröffentlichungstag und Bekanntmachung des Hinweises auf die Patenterteilung: **28.08.2002**
(21) Anmeldenummer: 97949903.5
(22) Anmeldetag: 10.11.1997
(51) Int. Cl.: H04M 3/42, H04Q 7/38, H04Q 7/22

(54) **VERFAHREN UND EINRICHTUNG ZUR ERMÖGLICHUNG EINES ZUGRIFFS AUF DIENSTE UND EINRICHTUNGEN EINES GSM-MOBILFUNKNETZES ÜBER EIN EXTERNES TELEKOMMUNIKATIONSNETZ**
METHOD AND DEVICE TO PROVIDE ACCESS TO SERVICES AND EQUIPMENT IN A GSM MOBILE TELEPHONE NETWORK VIA AN EXTERNAL TELECOMMUNICATION NETWORK
PROCEDE ET DISPOSITIF POUR PERMETTRE L'ACCES A DES SERVICES ET A DES EQUIPEMENTS DANS UN RESEAU TELEPHONIQUE MOBILE GSM PAR L'INTERMEDIAIRE D'UN RESEAU DE TELECOMMUNICATIONS EXTERNE

(30) Priorität: 14.11.1996 DE 19647109
(43) Veröffentlichungstag der Anmeldung: 22.09.1999
(73) Patentinhaber: T-Mobile Deutschland GmbH, 53227 Bonn (DE)
(72) Erfinder: BRUNE, Peter, D-53340 Meckenheim (DE); HAUSER, Hans, D-53343 Wachtberg (DE); LJUNGSTRÖM, Patrick, D-53639 Königswinter (DE)
(74) Vertreter: Riebling, Peter, Dr.-Ing.
(86) Internationale Anmeldenummer: DE9702624
(87) Internationale Veröffentlichungsnummer: WO98021905

(56) Entgegenhaltungen:
- EP-A- 0 714 214
- WO-A-93/13518
- WO-A-95/21509
- DE-A- 4 441 753

## Beschreibung

Die Erfindung betrifft ein Verfahren und Einrichtung zur Ermöglichung eines Zugriffs auf Dienste und Einrichtungen eines GSM-Mobilfunknetzes über ein externes Telekommunikationsnetzen, wobei es sich bei dem externen Kommunikationsnetz bevorzugt um ein nicht-GSM Netz handelt.

Sobald ein GSM-Mobilfunkteilnehmer den Bereich seines GSM-Netzes verläßt, bzw. sein Mobiltelefon nicht benutzen kann, hat er keine oder nur eingeschränkte Möglichkeiten, auf verschiedene GSM-Dienste oder Einrichtungen zuzugreifen, Daten abzufragen oder für Ihn spezifische Teilnehmerparameter zu verändern.

Z.B. kann ein Mobilteilehmer eines Mobilfunknetzes mit einer Mobilrufnummer (MSISDN) von +49 123 d₁ d₂ d₃ d₄ d₅ d₆ d₇ momentan sein auf ein öffentliches Festnetz (PSTN) basierendes Voice Mail System außerhalb von Deutschland auf drei verschiedene Arten erreichen:
1) durch direktes Wählen einer fünfzehnstelligen Nummer
   +49 456 789 d₁ d₂ d₃ d₄ d₅ d₆ d₇
   oder, sobald das z.B. für das D1-Mobilfunknetz geplante "1y" Servicenummern-Konzept im ganzen D1 Netz verfügbar ist durch Benutzen der vierzehnstelligen Ziffer
   +49 123 1y d₁ d₂ d₃ d₄ d₅ d₆ d₇
   (mit z.B. y=3 für das Voice Mail System)
   zumeist gefolgt durch Eingabe einer Geheimnummer (PIN) für den Zugriff auf seine Voice Mail Box mittels des Mehrfrequenzwahlverfahrens (DTMF), da eine automatische Identifikation des Anrufenden (CLI: Calling Line Identification) normalerweise durch die im internationalen Fernsprechverkehr benutzten Signalisierungssysteme nicht unterstützt wird.
2) durch direktes Wählen der eigenen zwölfstelligen MSISDN
   +49 123 d₁ d₂ d₃ d₄ d₅ d₆ d₇
   vorausgesetzt eine Rufweiterleitung (Call Forwarding Unconditional) zur eigenen Voice Mail Box ist eingerichtet, wiederum gefolgt von der Eingabe der PIN für die Voice Mail Box mittels DTMF-Signalen.
3) durch indirektes Einwählen über den Voice Mail Box Operator durch Benutzen der zwölfstelligen Zahlenfolge
   +49 456 789 x₁ x₂ x₃ x₄

Der Voice Mail Box Operator fragt nach der MSISDN und der entsprechenden PIN und gibt diese an das Voice Mail System weiter.

Keine der drei beschriebenen Verfahren arbeitet einwandfrei. Die Wahlsequenz, im Beispiel +49 456 789 d₁ d₂ d₃ d₄ d₅ d₆ d₇ versagt in den meisten Teilen der Welt, da die Anzahl der Zahlen, die durch die internationalen Netze unterstützt werden, auf meist zwölf Stellen begrenzt ist (manchmal sogar weniger). Obwohl schon vor langer Zeit die Unterstützung von fünfzehn Stellen durch die ITU-T für das Jahr 1996 angekündigt wurde, ist es sehr unwahrscheinlich daß es in naher Zukunft erreicht wird, zumindest nicht 1996. Praktisch werden weiterhin Netzwerke über Jahre hinweg existieren, die maximal zwölfstellige Nummern unterstützen. Weiterhin ist jeder Einfluß des Teilnehmers auf den Übertragungsweg seinen Anrufes meist unmöglich (und falls es möglich ist wäre der Teilnehmer meist damit überfordert), und selbst das Entwicklungspotential vieler Netzbetreiber ist eingeschränkt auf die Einführung von mehr und mehr internationaler Verbindungen mit CCS7-Signalisierung (Common Channel Signalling System No.7).

In Zusammenhang mit Verfahren 2) und der Anwahl von +49 123 1y d₁ d₂ d₃ d₄ d₅ d₆ d₇, trifft zumeist ebenso das Argument unter 1) zu. Weiterhin leidet das Verfahren nach 2) darunter, daß es einfach unmöglich ist, die Call Forwarding Einstellungen von außerhalb zu ändern, ohne sich dabei in einem GSM-Netz registrieren zu können, das ein Roaming Abkommen mit dem Heimatnetz geschlossen hat. Tatsächlich gibt es noch ein ernsthaftes weiteres Problem: Die D1 Roaming Guide empfiehlt, alle Conditional Call Forwardings auszuschalten, falls außerhalb des D1 Netzes kommuniziert wird, um übertrieben hohe Telefonkosten durch das internationale Routing von eintreffenden Anrufen zum besuchten Mobiltelefonnetz VPLMN und das nachfolgende internationale Zurückrouten zum D1 Voice Mail System zu vermeiden. Wie ist aber ein Deaktivieren aller Call Forwarding Eintragungen möglich, ohne ein GSM Netz zu benutzen, im Fall der Teilnehmer vergessen hat das Call Forwarding zu deaktivieren oder im Fall er ein Call Forwarding zu einem Telefon eines öffentlichen Festnetzes PSTN innerhalb des besuchten Landes abändern möchte?

Verfahren 3) ist nicht 24 Stunden am Tag und 7 Tage in der Woche verfügbar. Im Fall sich der Teilnehmer außerhalb Europas aufhält kann das nutzbare Zeitfenster wegen der Zeitverschiebung sehr klein werden. Nicht zuletzt kann der Operator nur etwa 50% der Anrufe annehmen und bearbeiten. Falls ein zweites Voice Mail System eingerichtet wird, kann dieses Verfahren nicht länger arbeiten, da dann jedem System eine eigene Operatornummer zuzuordnen ist, und der Teilnehmer über die Zuordnung seiner Voice Mail Box zum einen oder anderen System informiert sein muß.

Aus der WO 95/21509 A1 ist ein Verfahren zur Ermöglichung eines Zugriffs auf Dienste und Einrichtungen eines GSM-Mobilfunknetzes durch einen GSM-Teilnehmer über ein beliebiges, externes Telekommunikationsnetz bekannt, wobei von dem beliebigen Telekommunikationsnetz aus über eine spezielle Rufnummer ein Zugangsvermittlungsknoten (GMSC) des GSM-Netzes direkt angewählt werden kann. Nach Anwahl des Zugangsvermittlungsknotens wird der Teilnehmer aufgefordert, eine Selbstidentifikation durch dialogorientierte Abfrage seiner Identität durchzuführen, wobei nach der Identifikation durch Zugriff auf das HLR ein gewünschter Dienst oder eine Einrichtung angewählt werden kann, auf welche der Teilnehmer Zugriff erhalten möchte.

Aufgabe der Erfindung ist es, ein Verfahren vorzuschlagen, das einem GSM-Teilnehmer einen Zugriff auf teilnehmerspezifische Dienste und Einrichtungen seines GSM-Netzes von einem externen Kommunikationsnetz ermöglicht, insbesondere auch von jedem beliebigen, nicht-GSM Netz heraus.

Gelöst wird diese Aufgabe durch die Merkmale des Patentanspruchs 1 (Verfahren) oder des Anspruchs 9 (Einrichtung).

Erfindungsgemäß ist in einem internationalen Zugangsvermittlungsknoten (IAN) zwischen einem GSM-Netz und einem externen Kommunikationsnetz Netz ein System zur automatischen Rufumleitung (ACD) installiert. Der internationale Zugangsvermittlungsknoten wiederum ist mit jeder GSM Vermittlung (MSC) verbunden (vorzugsweise über das ISDN Anwenderteil ISUP). Der internationale Zugangsvermittlungsknoten (IAN) kann nun durch eine spezielle, relativ kurze Ziffernfolge adressiert und angerufen werden. Der gesamte eingehende Verkehr mit der Nummer +49 123 0999 wird zum Zugangsvermittlungsknoten (IAN) geroutet. Natürlich kann diese Wahlsequenz auch innerhalb Deutschlands benutzt werden, aber dies ist im Zusammenhang mit der Erfindung nicht von Bedeutung.

Der Zugangsvermittlungsknoten (IAN) wird durch ein MAP-Interface (MAP: Mobile Application Part) erweitert. Dadurch können die Einschränkungen bei der Manipulation der Sperrdaten (Barring Data) überwunden werden, falls der Teilnehmer über kein eigenes Voice Mail System verfügt. Auch die "mißbräuchliche" Verwendung des Voice Mail Systems als eine Art von Pseudo Authentifikations-System und die damit verbundene Belastung des Systems entfällt damit.

Dazu wird im Zugangsvermittlungsknoten (IAN) eine sich selbst aufbauende Datenbank installiert, die als eine Art minimales Teilnehmer-Administrationssystem arbeitet. Wenn die IAN-Zugangsnummer zum ersten Mal angewählt wird und der IAN feststellt, daß bis jetzt kein Eintrag für die anrufende (calling) MSISDN (welche in der CLI übermittelt wird) existiert, erwartet der IAN vom Teilnehmer die Eingabe einer frei wählbaren PIN über DTMF. Über den MAP-Dialog: Sendrouting_info unter Übermittlung der MSISDN wird die zur MSISDN zugehörige IMSI vom HLR angefordert.

Das System zur automatischen Rufumleitung (ACD) initiiert einen Anwendungsprozess, welcher mit einem DTMF-Empfangs- und Auswerteeinrichtung verknüpft wird und für den Anrufenden eine Ansage einspielt (z.B. "Wenn Sie Ihre Voice Mail Box abfragen wollen, drücken Sie bitte die Ziffer '1' ").

Falls durch den Teilnehmer eine Auswahl getroffen wurde, wird dieser aufgefordert, seine GSM-Teilnehmernummer (MSISDN) einzugeben und die zugehörige Geheimnummer (PIN) für den Zugriff auf die Voice Mail Box. Mit diesen Informationen baut das Rufumleitungssystem (ACD) einen Ruf zum Voice Mail System auf und simuliert das Abfrageinterface zum Voice Mail System, indem es nach Art einer lokalen vorgeschalteten Einrichtung vor Ort agiert. Wenn die PIN korrekt war, wird der Anruf zum Voice Mail System durchgestellt und der Teilnehmer kann darauf zugreifen. Diese Art der Authentisierung kann grundsätzlich auch für Mobilbox externe Dienste verwendet werden.

Alternativ kann eine Spracherkennungseinrichtung installiert werden, um die Teilnehmerdaten abzufragen. Dies ist wichtig für die wenigen Fälle irgendwo auf der Welt, bei denen kein DTMF-Signal erzeugt werden kann.

Es wurde bereits erwähnt, daß es unmöglich ist, die Rufweiterleitung im GSM Netz zu ändern, ohne daß man sich in seinem Heimat-GSM-Netz oder einem verbundenen GSM-Netz registriert. Natürlich macht ein GSM-unabhängiger Zugriff auf die vom Teilnehmer kontrollierbaren Heimatregister-Daten, d.h. die HLR-Daten, die mittels Teilnehmereingabe (SCI: Subscriber Controlled Input) veränderbar sind, nicht nur Sinn, um die Rufweiterleitungen (Conditional Call Forwardings) von außerhalb des Netzes zu deaktivieren (falls der Teilnehmer dies vor Verlassen des Heimatlandes vergessen hat). Durch einfache Bereitstellung des GSM-eigenen SCI-Interface ist es einem Teilnehmer nie möglich, eine Rufweiterleitung auf ein Telefon eines fremden, öffentlichen Fernsprechnetzes PSTN innerhalb eines besuchten Landes zu schalten, welches Land entweder überhaupt kein GSM-Netz besitzt, oder kein GSM-Netz besitzt, mit dem ein Roamingabkommen mit dem Heimat-Netz besteht.

Erfindungsgemäß sollen die folgenden, vom Teilnehmer veränderbaren HLR-Daten verwaltet werden:
- forwarded-to Nummern durch Call Forwarding Typ (unconditional, on Mobile Subscriber not reachable, on no reply, on Mobile Subscriber busy) und per Basic Service Group
- no Reply Condition Timer
- the GSM Barrings Programs (Rufsperrungen)
   - Sperren aller eingehenden Anrufe
   - Sperren aller abgehender Rufe
   - Sperren aller abgehenden internationalen Rufe
   - Sperren aller eingehenden Anrufe beim Roaming außerhalb des Heimatnetz-Landes (HPLMN)
   - Sperren aller abgehenden internationalen Rufe mit Ausnahme derer zum HPLMN-Land.

Zum Ändern der Call Forwarding-to Daten genügt die PIN für den Zugriff zur Voice Mail Box, zumindest bei GSM-Teilnehmern, die über eine Voice Mail Box verfügen. Für die Rufsperrung ist ein MAP-Interface zum externen Fernsprechnetz PLMN notwendig, aufgrund der GSM-internen Passwordüberprüfung.

Das Rufumleitungssystem (ACD) initiiert einen Anwendungsprozess, welcher mit einem DTMF Empfänger verknüpft wird und wiederum eine Ansage einspielt (z.B. "Wenn Sie das Call Forwarding ändern wollen, drücken Sie bitte die Ziffer '2'. Wenn Sie Ihre Voice Mail Box abfragen wollen, drücken Sie bitte die Ziffer '3' ").
Wiederum wird der Anrufer vom System aufgefordert, seine MSISDN und die zugehörige PIN für die Voice Mail Box einzugeben. Diese Daten werden im Dialog mit dem Voice Mail System verifiziert. Falls eine Modifikation des Call Forwarding gewünscht wird, wird der Teilnehmer aufgefordert, die neue Weiterleitungs-Rufnummer einzugeben. Mit den entsprechenden Daten wird ein HLR-Operator Befehl erzeugt und an das HLR gesendet.

Es kann außerdem eine Basic Service Group kann ausgewählt werden. Wenn der Teilnehmer ein Call Forwarding zu seinem eigenen Voice Mail System einrichten will, ist keine DTMF-Signalübertragung unter Eingabe der Weiterleitungsnummer notwendig, da alle benötigten Informationen bereits vorliegen.

Schließlich übergibt das HLR die Daten an das besuchte Mobilfunknetz (VPLMN) mittels der Nachricht: Insert_subscriber_data.

Es ist nicht notwendig, innerhalb des internationalen Zugangsvermittlungsknotens separate Abrechnungsdaten zu erzeugen. Jedoch erzeugen die GSM-Vermittlungen sogenannte Event Records von SCI Operationen, in denen eine Aufzeichnung aller Änderungen der Weiterleitungsnummern aufgelistet wird. Es ist vorgesehen, daß solche Event Records auch vom Zugangsvermittlungsknoten (IAN) erzeugt werden.

Durch Einführung des MAP-Interface wird das vom Teilnehmer gewohnte Systemverhalten nicht beeinträchtigt. Wie bereits oben beschrieben, wird im Rufumleitungssystem (ACD) wiederum ein Anwendugsprozess initiiert, welcher mit einem DTMF-Empfänger verknüpft wird und eine Ansage einspielt (z.B. "Wenn Sie das Call Forwarding ändern wollen, drücken Sie bitte die Ziffer '2'. Wenn Sie Ihre Rufweiterleitungsnummer abfragen wollen, drücken Sie bitte die Ziffer '3' ").
Wiederum wird der Anrufer vom System aufgefordert, über DTMF seine MSISDN und die zugehörige PIN (jetzt aber die zuvor vom Teilnehmer selbst bestimmte PIN) einzugeben. Diese Daten werden in der PIN-Datenbank verifiziert. Das System simuliert nun das Subscriber_controlled_input MAP-Interface zum Heimatregister (HLR) und übermittelt diesem die entsprechenden Daten des Teilnehmers. Das HLR überträgt diese Daten zum besuchten Fernsprechnetz (VPLMN) mittels der Nachricht: Insert_subscriber_data. Es ist wesentlich, daß für diese Art der PIN-Registrierung im internationalen Zugangsvermittlungsknoten nur gesicherte Daten bezüglich des Anrufers verwendet werden, die zur Identifizierung und Authentisierung dienen. Typischerweise kann die geforderte Qualität bezüglich der Sicherheit der Daten nur für Rufe aus dem eigenen Netz (sprich Heimat-GSM-Netz) garantiert werden.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigt:
- Figur 1:: Ein System zur automatischen Rufumleitung, eingerichtet in einem beliebigem GSM-Vermittlungsknoten, Abfrage der Voice Mail Box;
- Figur 2:: Ein System zur automatischen Rufumleitung, eingerichtet in einem beliebigem GSM-Vermittlungsknoten, Simulation der Operatorschnittstelle zum HLR, Pseudo-Authentifikation über die PIN der Voice Mail Box;
- Figur 3:: Ein System zur automatischen Rufumleitung, eingerichtet in einem beliebigem GSM-Vermittlungsknoten, MAP-Interface zwischen IAN und HLR, Belegung der PIN-Datenbank durch den Teilnehmer;
- Figur 4:: Ein System zur automatischen Rufumleitung, eingerichtet in einem beliebigem GSM-Vermittlungsknoten, MAP-Interface zwischen IAN und HLR, Authentifikation durch (selbst-belegbare) PIN-Datenbank, Simulation einer Manipulation von ergänzenden Servicedaten durch die GSM Mobilstation;
- Figur 5:: Flußdiagramm für den Zugriff eines Teilnehmers über den Vermittlungsknoten auf die Voice Mail Box.

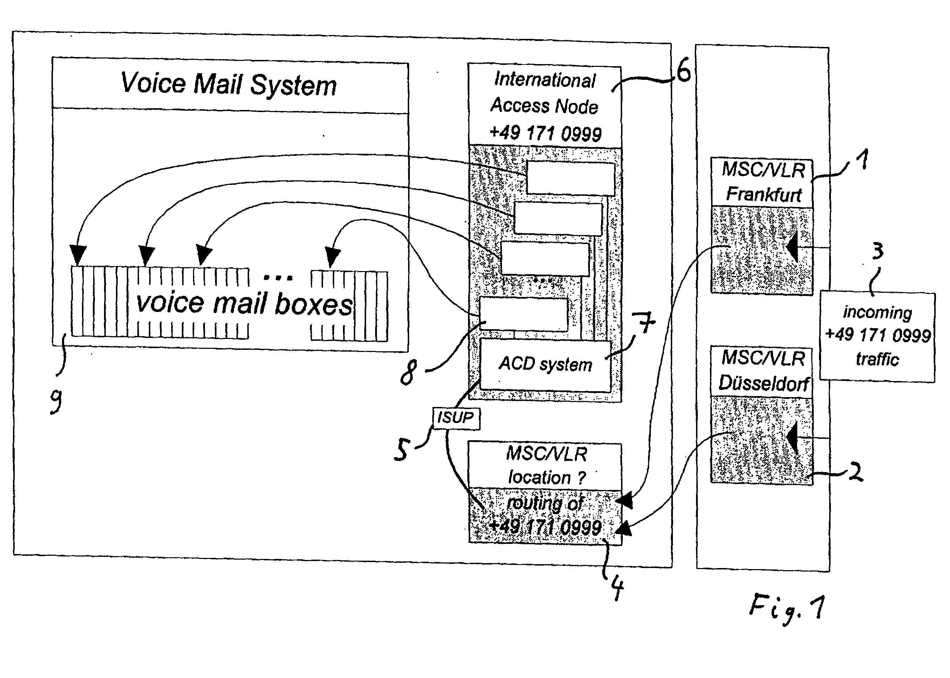

In Figur 1 sind, von einer Vielzahl von Mobilfunkvermittlungsstellen MSC, zwei Vermittlungsstellen 1,2 dargestellt, bei denen laufend Anrufe auch von nicht-GSM Telekommunkíkationsnetzen eingehen. Erfindungsgemäß werden Anrufe 3 unter einer bestimmten Rufnummer z.B. +49 123 09999 direkt an die dem internationalen Zugangsvermittlungsknoten 6 zugeordnete Vermittlungsstelle 4 weitergegeben und über ISUP 5 an das dort eingerichtete System zur automatischen Rufumleitung ACD 7 gegeben. Das System zur automatischen Rufumleitung 7 ist mit einer Vielzahl von DTMF-Erkennungssystemen 8 gekoppelt, welche in der Lage sind, mit dem Anrufer einen Dialog zu führen und mittels DTMF eingegebene Daten auszuwerten.
Nachdem der anrufende Teilnehmer seine persönliche Rufnummer (MSISDN) und seine Geheimnummer (PIN) für den Zugriff auf seine Voice Mail Box mittels DTMF eingegeben hat, wird sein Anruf zum Voice Mail System 9 durchgeschaltet und der Anrufer kann Nachrichten aufsprechen bzw. abhören.

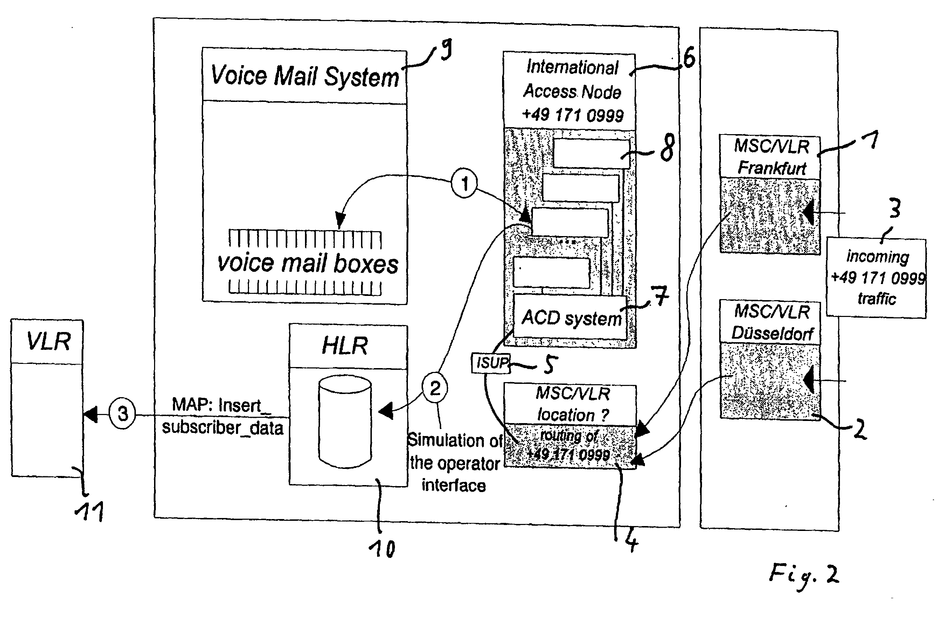

Figur 2 zeigt eine erfindungsgemäße Anwendung, bei der ein Teilnehmer unter Benutzung eines beliebigen Telekommunikationsnetzes Zugriff auf Speicherzellen seines Heimatregisters (HLR) 10 erhalten will. Problem dabei ist, daß es für einen Teilnehmer normalerweise unmöglich ist, sich über ein nicht-GSM Kommunikationsnetz als für das Heimatregister (HLR) zugriffsberechtigt zu identifizieren, da in diesem Falle keine ordnungsgemäße Authentifikation durchgeführt werden kann.

Erfindungsgemäß wird dieses Problem umgangen, indem sich der Teilnehmer gemäß des im Beispiel zu Figur 1 beschriebenen Verfahrens gegenüber dem Voice Mail System identifiziert (Schritt [1]). Nach erfolgreicher Authentifikation wird vom Rufumleitungssystem 7 durch Simulation der Schnittstellenbefehle für den Zugriff auf das Heimatregister (HLR) eine Verbindung mit dem HLR hergestellt (Schritt [2]). Die neuen, vom HLR erhaltenen Informationen werden z.B. mittels einer MAP-Nachricht: Insert_subscriber_data Nachricht an das Besucherregister (VLR) 11 weitergegeben (Schritt [3]).

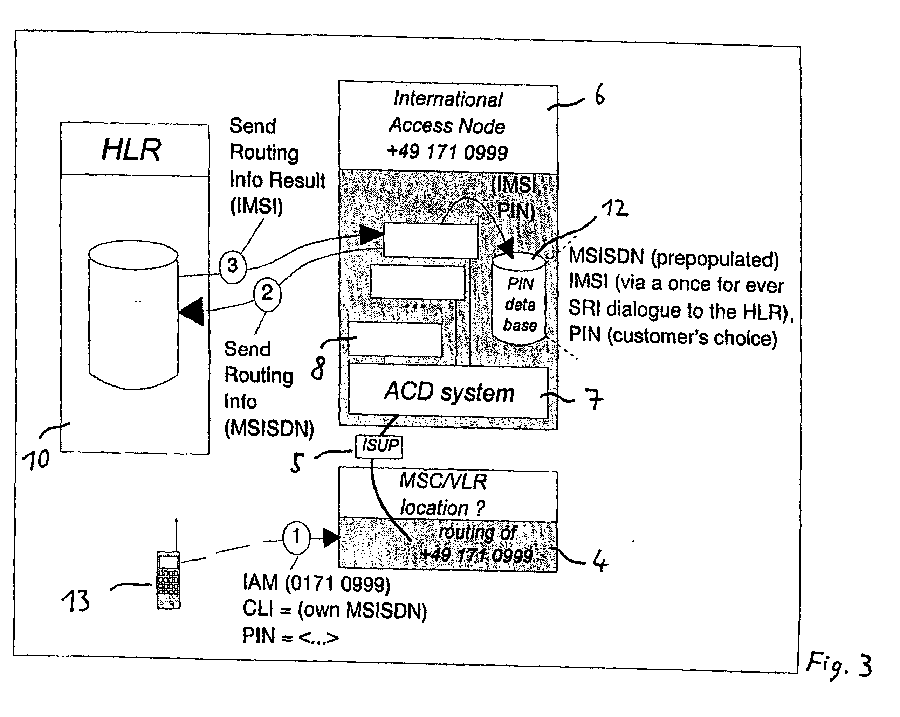

Figur 3 zeigt eine weitere erfindungsgemäße Möglichkeit des Zugriffs eines Teilnehmers auf das Heimatregister 10. Zur Initialisierung dieses Zugriffsdienstes, wählt sich der Teilnehmer in einem ersten Schritt [1] über sein Mobiltelefon 13 durch Anwahl einer speziellen Rufnummer, z.B. +49 123 0999, in den internationalen Zugangsvermittlungsknoten 4,6 ein. Aufgrund der Anruferidentifikation (CLI) wird dem System die Teilnehmerrufnummer (MSISDN) des Anrufers mitgeteilt. Aus der MSISDN wird im Dialog mit dem zugeordneten Heimatregister HLR (Schritt [2] und [3]) die zugehörige Teilnehmerkennung IMSI ermittelt. Im IAN ist eine sich selbst aufbauende Datenbank 12 eingerichtet, in welcher nun nach der IMSI des Anrufers gesucht wird. Ist die IMSI des Anrufers in der Datenbank nicht registriert, so wird der Anrufer von der DTMF-Erkennung 8 aufgefordert, eine beliebige Geheimnummer (PIN) einzugeben, die dann zusammen mit der IMSI in der Datenbank 12 abgelegt wird.

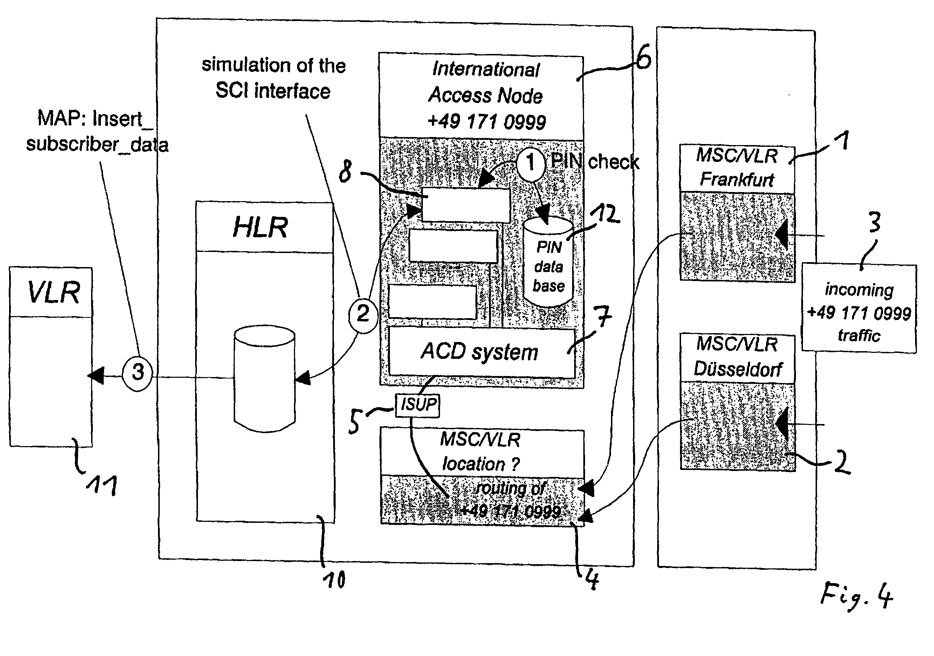

Ruft der Teilnehmer gemäß Figur 4, in Zukunft die Zugangsrufnummer für den Zugangsvermittlungsknoten (IAN) aus einem beliebigen Kommunikationsnetz an, um z.B. seine Eintragungen im HLR zu ändern, so wird der Teilnehmer vom DTMF-Erkennungssystem aufgefordert, mittels DTMF seine MSISDN und die zuvor in der Datenbank 12 abgelegte, selbst ausgewählte PIN einzugeben. Die eingegebenen Daten werden mit den Eintragungen in der Datenbank verglichen. Stimmen die Daten überein, so simuliert das Rufumleitungssystem 7 das teilnehmerkontollierte Interface (SCI) zum HLR ,so daß der Teilnehmer nun Zugriff auf das HLR bekommt und darin Daten über DTMF-Signalisierung verändern kann, vgl. Schritt [2]. Die neuen, vom HLR erhaltenen Informationen werden wiederum z.B. mittels einer MAP-Nachricht: Insert_subscriber_data Nachricht an das Besucherregister 11 weitergegeben, vgl. Schritt [3].

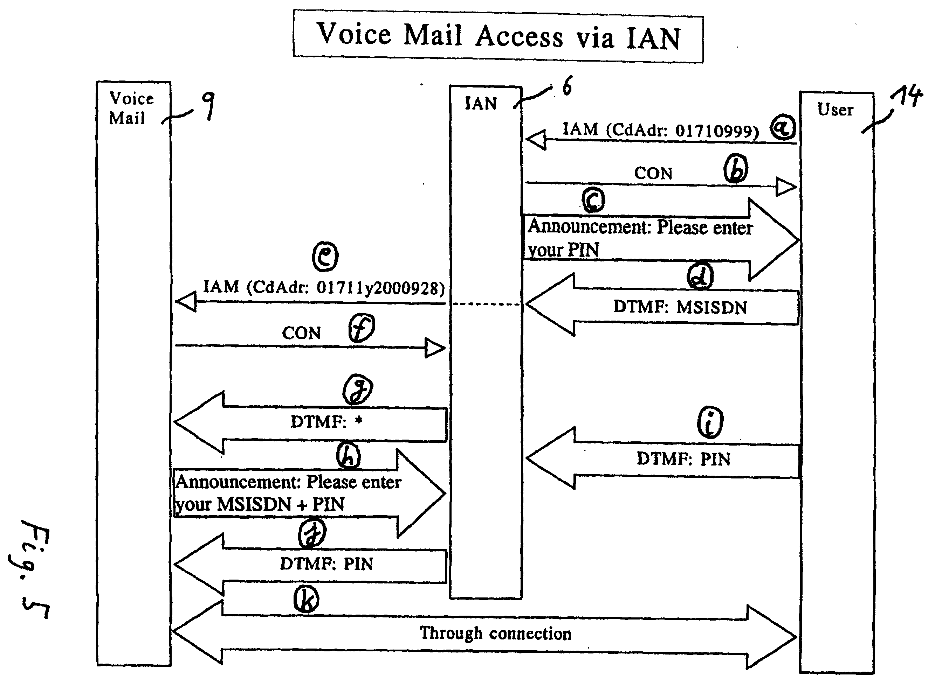

In Figur 5 ist schematisch der Ablauf der Kommunikation zwischen Teilnehmer, Zugangsvermittlungsknoten IAN und Voice Mail System (ACD) dargestellt.

In einem ersten Schritt (a) wählt der Teilnehmer 14 eine spezielle Rufnummer, z.B. +49 123 0999, durch die er direkt mit dem Zugangsvermittlungsknoten 6 verbunden wird. Der Teilnehmer bekommt eine Bestätigung CON gemäß Schritt (b). In einem weiteren Schritt (c) wird der Teilnehmer 14 durch eine Ansage aufgefordert, seine MSISDN und seine PIN einzugeben. Zuerst gibt der Teilnehmer seine MSISDN ein, Schritt (d), und dann seine PIN, Schritt (i).
Mit der MSISDN stellt der Zugangsvermittlungsknoten eine Verbindung zum Voice Mail System 9 her, indem er die notwendigen Schnittstellenprotokolle simuliert, Schritt (e).
Das Voice Mail System bestätigt mit (f).
Durch ein DTMF Signal (g) initiiert der Zugangsvermittlungsknoten 6 im Voice Mail System die Aufforderung (h) zur Eingabe der PIN, welche dann vom Zugangsvermittlungsknoten 6 an das Voice Mail System übergeben wird (j). Sind alle Schritte erfolgreich durchlaufen, so wird der Teilnehmer 14 direkt zum Voice Mail System 9 durchgeschaltet (k) und erhält Zugriff auf seine Voice Mail Box.

## Patentansprüche

1. Verfahren zur Ermöglichung eines Zugriffs auf Dienste und Einrichtungen eines GSM-Mobilfunknetzes durch einen GSM-Teilnehmer (14) über ein beliebiges, externes Telekommunikationsnetz, wobei von dem beliebigen Telekommunikationsnetz aus über eine spezielle Rufnummer ein internationaler Zugangsvermittlungsknoten IAN (6) des GSM-Netzes direkt angewählt werden kann,
daß nach Anwahl des Zugangsvermittlungsknotens IAN (6) der Teilnehmer (14) aufgefordert wird, einen gewünschten Dienst oder eine Einrichtung auszuwählen, auf welche er Zugriff erhalten möchte, daß nach Auswahl des Dienstes eine Selbstidentifikation des Teilnehmers durch dialogorientierte Abfrage seiner Mobilrufnummer MSISDN und einer persönlichen Geheimnummer PIN erfolgt, daß durch ein System zur automatischen Rufumleitung ADC (7) unter Simulation des GSM-internen Signalisierungsverkehrs mit Hilfe der gewonnenen Daten, eine Verbindung zum gewünschten Dienst oder der Einrichtung aufgebaut wird, so daß nach Überprüfung der MSISDN bzw. PIN der Teilnehmer (14) Zugriff auf den Dienst und/oder die Einrichtung erhält, und daß durch Simulation des Subscriber_Controlled_Input MAP-Interface Daten vom Zugangsvermittlungsknoten IAN (6) an das Heimatregister HLR (10) übertragen werden
**dadurch gekennzeichnet,**
**daß** im Zugangsvermittlungsknoten IAN (6) eine Datenbank (12) eingerichtet ist, in der sich der Teilnehmer (14) bei erstmaliger Anwahl des internationalen Zugangsvermittlungsknotens (6) aus dem GSM-Netz durch Eingabe der beliebig wählbaren, persönlichen Geheimnummer selbst registrieren kann, wobei gesicherte, teilnehmerspezifische Daten in der Datenbank (12) abgelegt werden.

2. Verfahren nach Anspruch 1, **dadurch gekennzeichnet, daß** die Eingabe der teilnehmerspezifischen Daten, welche Auswahlziffern, MSISDN und PIN enthalten, mittels DTMF-Signalisierung erfolgt.

3. Verfahren nach Anspruch 1, **dadurch gekennzeichnet, daß** die Eingabe der teilnehmerspezifischen Daten, welche Auswahlziffern, MSISDN und PIN enthalten, mittels eines Spracherkennungssystems erfolgt.

4. Verfahren nach einem der Ansprüche 1 bis 3, **dadurch gekennzeichnet, daß** der Teilnehmer (14) Zugriff auf das Voice Mail System (9) und seine Voice Mail Box erhält.

5. Verfahren nach einem der Ansprüche 1 bis 4, **dadurch gekennzeichnet, daß** der Teilnehmer (14), nach erfolgter Authentifikation gegenüber seines Voice Mail Systems (9), Zugriff auf ausgewählte Parameter seines Heimatregisters HLR (10) erhält.

6. Verfahren nach einem der Ansprüche 1 bis 5, **dadurch gekennzeichnet, daß** der internationale Zugangsvermittlungsknoten IAN (6) vom Teilnehmer (14) durchgeführte Aktionen in einem Event Record speichert.

7. Verfahren nach einem der Ansprüche 1 bis 6, **dadurch gekennzeichnet, daß** die Daten vom Heimatregister HLR (10) mittels der Nachricht Insert_Subscriber_ Data an das besuchte Fernsprechnetz (VPLMN) übertragen werden.

8. Verfahren nach einem der Ansprüche 1, 6 oder 7, **dadurch gekennzeichnet, daß** bei nochmaliger Anwahl des Zugangsvermittlungsknotens IAN (6) die MSISDN und die selbst definierte PIN des Teilnehmers (14) abgefragt werden und mit den in der Datenbank (12) gespeicherten Daten verglichen werden, und bei Übereinstimmung der Daten durch den Zugangsvermittlungsknoten (6) ein Verbindungsaufbau zum Heimatregister HLR (10) stattfindet und der Teilnehmer dadurch Zugriff auf das HLR erhält.

9. Einrichtung zur Ermöglichung eines Zugriffs auf Dienste und Einrichtungen eines GSM-Mobilfunknetzes durch einen GSM-Teilnehmer (14) über ein beliebiges, externes Telekommunikationsnetz, wobei das externe Telekommunikationsnetz direkt oder indirekt über wenigstens einen internationalen Zugangsvermittlungsknoten (6) mit dem Heimatnetz verbunden ist, wobei der internationale Zugangsvermittlungsknoten (6) ein System zur automatischen Rufumleitung ACD (7), ein System zur Erkennung und Auswertung von DTMF-Signalen (8) und Einrichtungen zur Simulation verschiedener Schnittstellen, die zum Verbindungsaufbau mit GSM-internen Einrichtungen benötigt werden, aufweist, und über eine MAP-Schnittstelle mit GSM-internen Teilnehmerregistern HLR (10) verbunden ist und darauf zugreifen kann,
**dadurch gekennzeichnet,**
**daß** im internationalen Zugangsvermittlungsknoten IAN (6) eine Datenbank (12) eingerichtet ist, in der vorwiegend durch den Teilnehmer (14) selbst gesicherte, teilnehmerspezifische Daten speicherbar sind.

10. Einrichtung nach Anspruch 9, **dadurch gekennzeichnet, daß** dem internationalen Zugangsvermittlungsknoten (6) eine spezielle Service Rufnummer zugeordnet ist.

11. Einrichtung nach einem der Ansprüche 9 oder 10, **dadurch gekennzeichnet, daß** der internationale Zugangsvermittlungsknoten (6) über eine geeignete Signalisierungsschnittstelle (5) direkt oder indirekt mit allen Vermittlungsstellen MSC (1, 2) des GSM-Netzes verbunden ist.

## Claims

1. Method for enabling access by a GSM subscriber (14) to services and facilities of a GSM mobile telephone network via any external telecommunication network, wherein an international access switching node IAN (6) of the GSM network can be dialled directly from the chosen telecommunication network via a special telephone number, wherein after dialling the access switching node IAN (6) the subscriber (14) is requested to select a desired service or facility to which he wishes to gain access, wherein after selecting the service the subscriber identifies himself through an interactive interrogation of his mobile telephone number MSISDN and personal identification number PIN, wherein using the data obtained, a system for automatic call distribution ACD (7) establishes connection to the desired service or facility with simulation of GSM-internal signalling traffic so that, once the MSISDN and/or PIN have been checked, the subscriber (14) gains access to the service and/or facility, and wherein data are transmitted by the access switching node IAN (6) to the home location register HLR (10) through simulation of the Subscriber_controlled_input MAP interface,
**characterized in that** a data base (12) is set up in the access switching node IAN (6) in which the subscriber (14) can register, when he dials the international access switching node (6) from the GSM network for the first time, by inputting his personal identification number, which can be chosen at will; secure subscriber-specific data being filed in the data base (12).

2. Method according to Claim 1, **characterized in that** input of subscriber-specific data that include selection digits, MSISDN and PIN is effected by means of DTMF signalling.

3. Method according to Claim 1, **characterized in that** input of subscriber-specific data that include selection digits, MSISDN and PIN is effected by means of a voice recognition system.

4. Method according to any one of Claims 1 to 3, **characterized in that** the subscriber (14) gains access to the voice mail system (9) and gets his voice mail box.

5. Method according to any one of Claims 1 to 4, **characterized in that**, after successful authentication in relation to his voice mail system (9), the subscriber (14) gains access to selected parameters of his home location register HLR (10).

6. Method according to any one of Claims 1 to 5, **characterized in that** the international access switching node IAN (6) stores actions performed by the subscriber (14) in an event record.

7. Method according to any one of Claims 1 to 6, **characterized in that** the data are transmitted by the home location register HLR (10) to the visited telephone network (VPLMN) by means of the message Insert_subscriber_data.

8. Method according to any one of Claims 1, 6 and 7, **characterized in that** when the access switching node IAN (6) is dialled on a subsequent occasion the subscriber's MSISDN and chosen PIN are interrogated and compared with the data stored in the data base (12), and if the data match, a connection to the home location register HLR (10) is established by the access switching node (6) and the subscriber is thereby given access to the HLR.

9. Device for enabling access by a GSM subscriber (14) to services and facilities of a GSM mobile telephone network via any external telecommunication network, wherein the external telecommunication network is connected directly or indirectly via at least one international access switching node (6) to the home network, the international access switching node (6) possessing a system for automatic call distribution ACD (7), a system for recognizing and evaluating DTMF signals (8) and facilities for simulating various interfaces needed for establishing connection with GSM-internal facilities, and being connected with, and capable of accessing, GSM-internal subscriber registers HLR (10) via a MAP interface, **characterized in that** a data base (12) is set up in the international access switching node IAN (6) in which secure subscriber-specific data are storable, mainly by the subscriber (14) himself.

10. Device according to Claim 9, **characterized in that** a special service telephone number is assigned to the international access switching node (6).

11. Device according to Claim 9 or Claim 10, **characterized in that** the international access switching node (6) is connected directly or indirectly to all switching centres MSC (1, 2) of the GSM network via a suitable signalling interface (5).

## Revendications

1. Procédé pour permettre à un abonné GSM (14) d'accéder à des services et à des équipements d'un réseau radiotéléphonique mobile GSM par l'intermédiaire d'un réseau de télécommunication externe quelconque, selon lequel à partir de ce réseau de télécommunication quelconque, un noeud de commutation d'accès international IAN (6) du réseau GSM peut être appelé directement, grâce à un numéro d'appel spécial ; après l'appel du noeud de commutation d'accès IAN (6), l'abonné (14) est invité à sélectionner un service souhaité ou un équipement auquel il aimerait avoir accès ; après la sélection du service, une auto-identification de l'abonné a lieu grâce à une interrogation dialoguée de son numéro d'appel mobile MSISDN et d'un numéro confidentiel personnel PIN ; grâce à un système de renvoi automatique d'appels ADC (7), une liaison avec le service souhaité ou l'équipement est établie avec une simulation du trafic de signalisation interne GSM à l'aide des données obtenues, de sorte qu'après vérification du MSISDN et du PIN, l'abonné (14) a accès au service et/ou à l'équipement ; et grâce à la simulation de l'interface MAP subscriber_controlled_input, des données sont transmises par le noeud de commutation d'accès IAN (6) à l'enregistreur de localisation nominal HLR (10),
**caractérisé en ce qu'**il est prévu dans le noeud de commutation d'accès IAN (6) une banque de données (12) dans laquelle l'abonné (14), lorsqu'il appelle pour la première fois le noeud de commutation d'accès (6) à partir du réseau GSM, peut s'inscrire lui-même en entrant le numéro confidentiel personnel qu'il peut choisir comme il veut, des données protégées et propres à l'abonné étant mises en mémoire dans la banque de données (12).

2. Procédé selon la revendication 1, **caractérisé en ce que** l'entrée des données propres à l'abonné qui contiennent des chiffres sélectionnés, MSISDN et PIN se fait à l'aide d'une signalisation DTMF.

3. Procédé selon la revendication 1, **caractérisé en ce que** l'entrée des données propres à l'abonné qui contiennent des chiffres sélectionnés, MSISDN et PIN se fait à l'aide d'un système de reconnaissance vocale.

4. Procédé selon l'une des revendications 1 à 3, **caractérisé en ce que** l'abonné (14) obtient l'accès au système de messagerie vocale (9) et à sa boîte vocale.

5. Procédé selon l'une des revendications 1 à 4, **caractérisé en ce que** l'abonné (14), après authentification par rapport à son système de messagerie vocale (9), obtient l'accès à des paramètres sélectionnés de son registre de localisation nominal HLR (10).

6. Procédé selon l'une des revendications 1 à 5, **caractérisé en ce que** le noeud de commutation d'accès international IAN (6) met en mémoire dans un rapport des événements des actions exécutées par l'abonné (14).

7. Procédé selon l'une des revendications 1 à 6, **caractérisé en ce que** les données, à partir du registre de localisation nominal (10), sont transmises à l'aide du message Insert_Subscriber_Data au réseau téléphonique visité (VPLMN).

8. Procédé selon l'une des revendications 1, 6 ou 7, **caractérisé en ce que** lors d'un nouvel appel du noeud de commutation d'accès IAN (6), le MSISDN et le PIN défini par l'abonné (14) lui-même sont interrogés et comparés aux données mises en mémoire dans la banque de données (12), et si les données concordent, une liaison est établie par le noeud de commutation d'accès (6) avec le registre de localisation nominal HLR (10) et l'abonné obtient ainsi l'accès à ce dernier.

9. Equipement pour permettre à un abonné GSM (14) d'accéder à des services et à des équipements d'un réseau radiotéléphonique mobile GSM par l'intermédiaire d'un réseau de télécommunication externe quelconque, étant précisé que le réseau de télécommunication externe est relié directement ou indirectement, par l'intermédiaire d'au moins un noeud de commutation d'accès international (6), au réseau nominal, et que le noeud de commutation d'accès international (6) comporte un système de renvoi automatique d'appels ACD (7), un système de reconnaissance et d'évaluation de signaux DTMF (8) et des équipements de simulation de différentes interfaces qui sont nécessaires pour établir la liaison avec des équipements internes au GSM, et que ledit noeud (6) est relié par l'intermédiaire d'une interface MAP à des registres d'abonnés HLR (10) internes du GSM et peut avoir accès à ceux-ci,
**caractérisé en ce qu'**il est prévu dans le noeud de commutation d'accès international IAN (6) une banque de données (12) dans laquelle peuvent être mises en mémoire des données propres à l'abonné, qui sont protégées essentiellement par l'abonné (14) lui-même.

10. Equipement selon la revendication 9, **caractérisé en ce qu'**un numéro d'appel de service spécial est attribué au noeud de commutation d'accès international (6).

11. Equipement selon la revendication 9 ou 10,
**caractérisé en ce que** le noeud de commutation d'accès international (6) est relié directement ou indirectement, par l'intermédiaire d'une interface de signalisation adéquate (5), à tous les centres de commutation MSC (1, 2) du réseau GSM.
